(19)

Europäisches
Patentamt
European
Patent Office
Office européen
des brevets

(11) **EP 2 116 815 A1**

(12) # EUROPEAN PATENT APPLICATION
published in accordance with Art. 153(4) EPC

(43) Date of publication:
**11.11.2009 Bulletin 2009/46**

(21) Application number: **07850917.1**

(22) Date of filing: **19.12.2007**

(51) Int Cl.:
**G01D 5/353** *(2006.01)* **G01D 21/00** *(2006.01)*
**G01F 1/66** *(2006.01)* **G01K 11/12** *(2006.01)*
**G01L 11/02** *(2006.01)* **G01N 21/00** *(2006.01)*
**G01P 5/00** *(2006.01)*

(86) International application number:
**PCT/JP2007/074447**

(87) International publication number:
**WO 2008/081719 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006354906**

(71) Applicant: **Sumitomo Electric Industries, Ltd.**
**Chuo-ku**
**Osaka-shi**
**Osaka 541-0041 (JP)**

(72) Inventors:
• **HAYASHI, Tetsuya**
**Yokohama-shi**
**Kanagawa 244-8588 (JP)**
• **SASAOKA, Eisuke**
**Yokohama-shi**
**Kanagawa 244-8588 (JP)**

• **YAMAMOTO, Yoshinori**
**Yokohama-shi**
**Kanagawa 244-8588 (JP)**
• **KATAYAMA, Makoto**
**Yokohama-shi**
**Kanagawa 244-8588 (JP)**
• **KANIE, Tomohiko**
**Yokohama-shi**
**Kanagawa 244-8588 (JP)**
• **ISHIKAWA, Shinji**
**Yokohama-shi**
**Kanagawa 244-8588 (JP)**
• **ICHIKAWA, Osamu**
**Yokohama-shi**
**Kanagawa 244-8588 (JP)**

(74) Representative: **Siegert, Georg**
**Hoffmann - Eitle**
**Patent- und Rechtsanwälte**
**Arabellastrasse 4**
**81925 München (DE)**

(54) **OBJECT PHYSICAL QUANTITY MEASURING METHOD AND CONTROL METHOD**

(57)      This invention relates to optical sensing technology to measure and control a physical quantity of an object that exists on or within a microstructure object, utilizing Brillouin scattering decreases. The measurement method prepares an optical waveguide one-, two- or three-dimensionally, on or within a micro-chemical chip, IC chip, or other element, and measures a physical quantity of the object on the basis of a property variation of light attributed to Brillouin scattering occurring in the optical waveguide.

*Fig.1*

EP 2 116 815 A1

## Description

## Technical Field

The present invention relates to a method of measuring a physical quantity of an object to be measured that exists on or within an element by using an optical waveguide, and to a method of controlling the physical quantity of the object to be measured.

## Background Art

In recent years, microchip technology has attracted attention for use in performing various processing such as mixing, causing reactions, separating, extracting, heating, cooling, detection, inspection, or the like, to an object (object subjected to measurement ) such as a chemical substance, a biological component, or the like. In this microchip technology, on a substrate (element) of glass or the like are formed minute flow paths (micro-flow paths) with dimensions of several tens to several hundreds of micrometers; various processing such as that described above is performed in these micro-flow paths. In order to accurately control such processing, there is a mounting demand for highly precise and rapid measurement of the physical properties of matter in such micro-flow paths.
Patent Document 1: Japanese Patent Application Laid-open No. 2006-297198
Non-patent Document 1: K.Y Song, Z. He, and K. Hotate, "Distributed strain measurement with millimeter-order spatial resolution based on Brillouin optical correlation domain analysis", Opt. Lett. 31, 2526-2528 (2006)

## Disclosure of the Invention

## Problems that the Invention is to Solve

The present inventors have examined the above conventional microchip technology, and as a result, have discovered the following problems.
That is, in conventional microchip technology, when measuring, as a distribution, the temperature of an object to be measured within a substrate, it has been necessary to affix thermocouples or other temperature sensors in the required number, distributed throughout the substrate. The planar distribution of temperature can be measured by thermography, but only surface temperature measurement has been possible. Further, thermocouples or other temperature sensors can measure the interior temperatures of the object when positioned in the interior of the object, but this method is not suitable for measurement when the object is itself minute, or when the heat capacity is small.
Further, in conventional microchip technology, there has been no means for measuring as a distribution the refractive index or absorption loss of an object in a substrate. Consequently, it has for example been necessary to form flow paths for each antibody, reagent, or other sample, to measure the refractive index or absorption loss of each sample in separate flow paths. Further, in the past there has been no effective means for measuring the pressure or flow velocity of a fluid in a fluid device.
For example, in Patent Document 1, the formation of an optical waveguide in a substrate, in order to measure an object temperature or the like by irradiating a fluid (object to be measured) flowing in a micro-flow path of a microchip with light, is disclosed.
However, using the technology disclosed in Patent Document 1, a spot in a micro-flow path is irradiated with light, so that the temperature or the like at the irradiated point (point of passage of light) is measured. In this case, it is not possible to measure, as a distribution, a physical quantity of the object existing in the substrate.
On the other hand, optical sensing technology of the prior art is known in which the Brillouin scattering phenomenon in optical fibers is used to measure the temperature distribution, strain distribution, loss distribution, or similar in the length direction of the optical fiber. That is, when light (pumping light) propagates in an optical fiber, acoustic waves are generated in the fiber by the pumping light. Brillouin scattering is a phenomenon in which, due to the interaction of this pumping light with acoustic waves, a portion of the power of the pumping light is shifted to the low-frequency side, and backscattering of light occurs. When there is light (probe light) opposing the pumping light, this scattered light appears as an amplification gain of the probe light.
By sweeping the frequency difference $\upsilon$ between the pumping light and the probe light, the spectrum of the gain due to Brillouin scattering is obtained. This is called the Brillouin gain spectrum (BGS); the BGS central frequency and spectral shape depend on temperature, the central frequency depends on strain, and the gain depends on loss, and each changes accordingly. Hence by measuring the BGS, the temperature, strain, and loss along the length direction of an optical fiber can be measured as distributions. There are various BGS distribution measurement methods, such as BOTDR, BOTDA, BOCDA, and similar; with respect to measurement precision, measurement time, and other factors, the BOCDA method is suitable.
That is, in optical sensing technology using the BOCDA method (optical fiber distribution sensing technology which adopts the Brillouin scattering technique employing a continuous light wave correlation control method), a frequency difference of $\upsilon$ is imparted to the pumping light and probe light, and by similarly performing frequency modulation, the correlation state between the two light waves is controlled. By intentionally forming places with high correlation and places with low correlation in the optical fiber, BGS information can be selectively acquired for places with high correlation. For example, in Non-patent Document 1, a spatial resolution of 3 mm is attained, and it is thought that in theory a spatial resolution of approximately 0.2 mm is possible.

The present invention has been developed to eliminate the problems described above. It is an object of the present invention to provide a measurement method and control method of measuring a physical quantity in an object to be measured that exists on or within an element which is a microstructure object, by means of optical sensing technology using the Brillouin scattering phenomenon.

**Means for Solving the Problems**

In order to achieve the above object, a measurement method according to the present invention is a method of measuring a physical quantity of an object (object subjected to measurement) existing on or within an element which is a microstructure object, in which an optical waveguide is one-, two- or three-dimensionally arranged on or within the element, and the physical quantity of the object is measured, on the basis of the property variation of light propagating in the optical waveguide, the property variation being attributed to Brillouin scattering occurring in the optical waveguide.

In this Specification, "element" includes a glass, plastic or other substrate, IC chip on which is formed a semiconductor integrated circuit or other microstructure object, in which are formed, in a predetermined pattern, flow paths themselves for the object, such as for example a chemical substance or biological component, or a plurality of cells (depressions) filled with the object, or the like. In microchip technology, various processing such as mixing, causing reactions, separating, extracting, heating, cooling, detection, inspection, and similar, are performed to the object such as a chemical substance, a biological component, and the like,. The element size need not be limited, and sizes of order several centimeters to several tens of centimeters can be used. And, sizes of order several tens to several hundreds of micrometers, such as are common for microchips, can also be used. Elements of such sizes are suitable for use in the fields of micro-chemical chips and IC chips, in which micro-flow paths, cells, and similar are formed.

Further, in this Specification, "preparation of an optical waveguide which is one-, two- or three-dimensionally arranged on or within an element" includes, for example, cases in which an optical waveguide is one-, two- or three-dimensionally formed on or within the element, along a pattern for formation of a flow path of the object, a plurality of cells, or a semiconductor integrated circuit, formed on the element or in the element; cases in which the flow path of the object is itself utilized as an optical waveguide; cases in which the object is itself utilized as an optical waveguide; cases in which an optical waveguide is one-, two- or three-dimensionally formed in a predetermined pattern, on or within the element, such that measurement is possible at a desired plurality of locations for a plurality of cells or for the formation pattern of a semiconductor integrated circuit; and the like. Further, an optical waveguide chip, prepared separately from the element (a separate member), with an optical waveguide formed in the substrate, chip, or the like, may be mounted on the element.

In particular, when the object is a fluid, by causing light to propagate within the object, the object can itself be utilized as an optical waveguide. In this case, using a measurement method according to the present invention, first a fluid itself as the object is secured as an optical waveguide, existing in a flow path, formed on or within an element, which has two end portions functioning as a light incidence end and as a light emission end. In this measurement method, in a state in which the fluid is itself secured as an optical waveguide in a flow path, the fluid which is the object is irradiated with light from one end portion of the flow path which is the light incidence end, and after propagating within the fluid existing in the flow path, the light emitted from the other end portion of the flow path which is the light emission end is detected, and a physical quantity of the fluid is itself measured on the basis of the property variation of the detected light which is attributed to Brillouin scattering occurring in the fluid.

Further, in a measurement method according to the present invention, an optical waveguide, which has a light incidence end and a light emission end and which has a shape continuing from the light incidence end to the light emission end, may be prepared, arranged on or within the element such that at least a portion of the optical waveguide is in proximity to the object. In this case, the optical waveguide is an optical waveguide member, one end of which functions at least as a light incidence end, and the other end of which functions at least as a light emission end, and an optical waveguide member at least one portion of which is embedded in the element may be included. Also, the optical waveguide, with one end functioning at least as a light incidence end and the other end functioning at least as a light emission end, may comprise an optical waveguide chip, in which is fabricated an optical waveguide region, continuous from the light incidence end to the light emission end. By fixing the optical waveguide chip on the element, the optical waveguide can be arranged on the element.

In a measurement method according to the present invention, the property variation of light propagating through an optical waveguide is a change in at least one of the central frequency and spectrum shape of BGS which is a spectral gain attributed to Brillouin scattering occurring in the optical waveguide.

In this Specification, "spectrum shape" means spectrum line widths, the sharpness of spectrum shapes (the angle of tapered portions), or the interval between adjacent BGS central frequencies, and "change in spectrum shape" includes both changes in the length direction of the optical waveguide and temporal changes.

Further, a measurement method according to the present invention enables measurement of the temperature of the object on the basis of the change in at least one of the BGS central frequency and spectrum shape. The measurement method according to the present invention can also measure the refractive index of the object on the basis of the change in at least one of the BGS central frequency and spectrum shape. The measurement method according to the present invention determines the strain appearing in the optical waveguide on the basis of the change in at least one of the BGS central frequency and spectrum shape, and determines the pressure applied to the object on the basis of the measurement result obtained for strain. Further, the measurement method according to the present invention can measure the flow velocity of the object, having a flow velocity component in the direction of light propagation, on the basis of the change in the BGS central frequency and spectrum shape.

Further, the property variation of light propagating through the optical waveguide (a physical quantity of the object to be measured) may be a change in the BGS. On the basis of this BGS change, the measurement method according to the present invention can measure absorption loss of the object.

Further, a measurement method according to the present invention enables measurement in an integrated manner of a physical quantity of an object, for a plurality of elements, in or on which are arranged optical waveguides each having a light incidence end and a light emission end. In this case, by optically connecting in succession the light emission end of an optical waveguide arranged in or on one element among the plurality of elements with the light incidence end of the optical waveguide arranged in or on another element, an element group is configured having two optical waveguide end portions, holistically functioning as a light incidence end and as a light emission end. In this measurement method, light which has been made incident from the optical waveguide end portion functioning as the light incidence end of the element group configured in this way, and which after propagating through the optical waveguides arranged in each of the plurality of elements is emitted from the optical waveguide end portion functioning as the light emission end of the element group, is detected. By means of this configuration also, a physical quantity of objects in each of the plurality of elements can be measured.

In a measurement method according to the present invention, a physical quantity of the object is adjusted on the basis of the measurement result for the object by the measurement method configured as described above.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

**Effects of the Invention**

In accordance with the present invention, an optical waveguide one-, two- or three-dimensionally arranged on or within an element can be utilized as a sensor head, or flow paths of an object formed on or within an element can be utilized as optical waveguides, and the distribution of property variation of light attributed to Brillouin scattering occurring in the optical waveguide is measured. By this means, physical quantities (for example, the temperature, refractive index, strain, pressure, flow velocity, light absorption loss, or the like of the object, as well as distributions of these) of the object on or within the element can be measured as distributions.

Further, when utilizing the flow path of the object itself as an optical waveguide, a plurality of antibodies, reagents, or other samples may be arranged, with spaces therebetween, in this flow path, so that there is no longer a need to form a plurality of flow paths.

Further, by optically coupling a plurality of elements, measurement all at once by a simple method of each of the objects on or within a plurality of elements can be performed.

Further, on the basis of a physical quantity (measured result) of an object measured as described above, the physical quantity of the object can be freely adjusted.

Hence a measurement method and a control method according to the present invention can be suitably applied to measurement and control in various microstructure objects, such as for example, on or in an element which is a glass substrate or the like, integration of the mixing, causing reactions, separating, extracting, heating, cooling, detection, inspection, and various other processing, of chemical substances, biological components and the like, in a micro-chemical chip, micro-chemical plant, biological inspection chip, as well as conduction tests of an IC chip, and the like.

**Brief Description of the Drawings**

Fig. 1 is a plane view showing in summary a configuration to realize one embodiment of a physical quantity measurement method of an object and of a physical quantity control method of the object according to the present invention;
Fig. 2 is a cross-sectional view of the element shown in Fig. 1;
Fig. 3 is a schematic diagram showing the configuration of a BOCDA method optical sensing device;

Fig. 4 is a plane view showing an element configuration to realize another embodiment of a physical quantity measurement method of an object and of a physical quantity control method of the object according to the present invention;

Fig. 5 is a plane view and a cross-sectional view showing an element configuration to realize still another embodiment of a physical quantity measurement method of an object and of a physical quantity control method of the object according to the present invention;

Fig. 6 is a conceptual diagram used to explain one method of absorption loss measurement;

Fig. 7 is a plane view used to explain a measurement method when a plurality of elements are optically coupled;

Fig. 8 is a plane view and a cross-sectional view showing the structure of an optical waveguide chip including an optical waveguide one-dimensionally arranged separately from the element;

Fig. 9 is a cross-sectional view of an optical waveguide chip along line I-I in the area (a) of Fig. 8, showing the state of coupling of the optical waveguide chip and element;

Fig. 10 is a plane view and a side view showing the structure of an optical waveguide chip including an optical waveguide two-dimensionally arranged separately from the element;

Fig. 11 is a cross-sectional view of the optical waveguide chip along line II-II in the area (a) of Fig. 10, showing a state of coupling between the optical waveguide chip and element;

Fig.12 is a plane view of the optical waveguide chip for coupling which is to be coupled to the optical waveguide chip shown in Fig. 10, and a plane view showing a coupled state;

Fig. 13 is a plane view and a side view showing the structure of an optical waveguide chip including an optical waveguide three-dimensionally arranged separately from the element; and,

Fig. 14 is a cross-sectional view of the optical waveguide chip along line III-III in the area (a) of Fig. 13, showing a state of coupling between the optical waveguide chip and element.

## Description of the Reference Numerals

1...element; 2...substrate; 3...flow path; 4, 4'...optical waveguide; 5...measurement main unit; 5a, 5b, 5c, 5d...connection optical fiber; 20... depression (cell); and 30a to 30c...optical waveguide chip (member for mounting comprising optical waveguide).

## Best Modes for Carrying Out the Invention

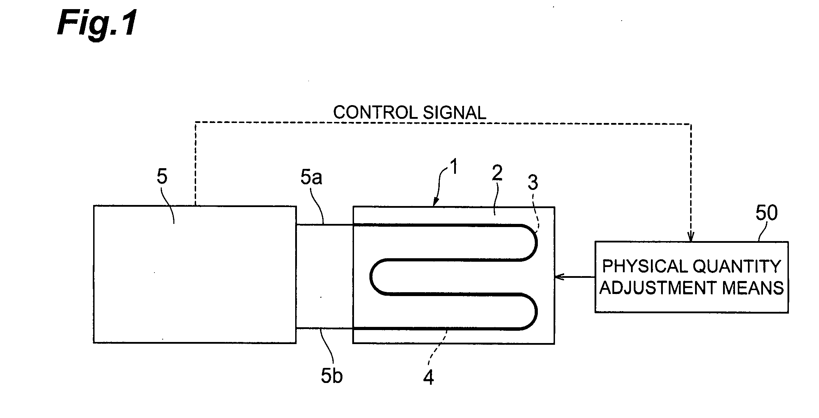

In the following, embodiments of physical quantity measurement methods and physical quantity control methods of an object to be measured according to the present invention will be explained in detail with reference to Figs. 1 to 14. In the description of the drawings, identical or corresponding components are designated by the same reference numerals, and overlapping description is omitted.

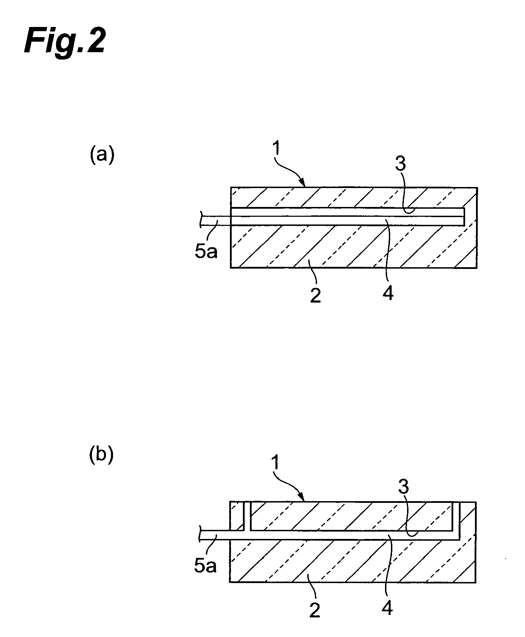

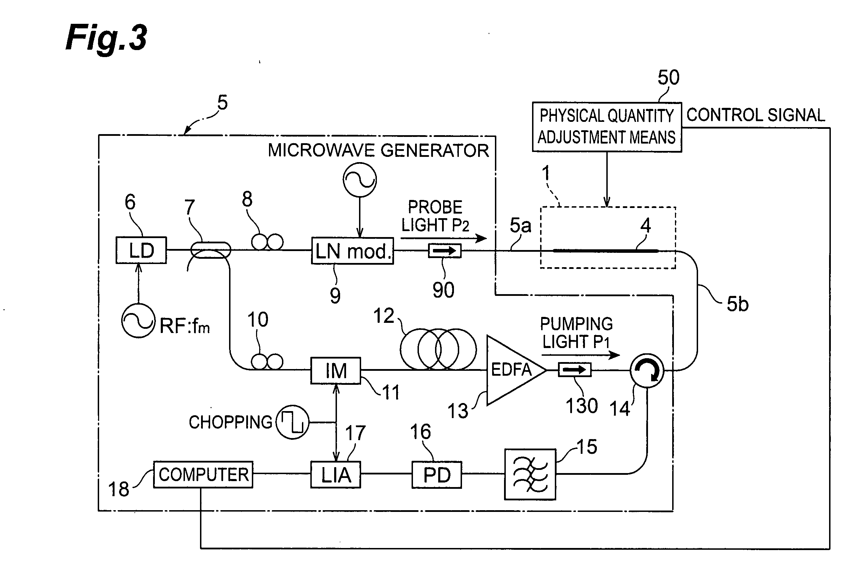

One embodiment of a measurement method and control method according to the present invention will be explained with reference to Figs. 1 to 3. Fig. 1 is a plane view showing a skeleton configuration to realize an embodiment of a physical quantity measurement method of an object and of a physical quantity control method of the object according to the present invention. Fig. 2 is a cross-sectional view of the element shown in Fig. 1 (configuration in which an optical waveguide is arranged within the element), whereas the area (a) shows a configuration in which the flow path and optical waveguide differ, and the area (b) shows a configuration in which the flow path also serves as the optical waveguide. Fig. 3 is a schematic diagram showing the configuration of a BOCDA method optical sensing device.

In Fig. 1, the element 1 which becomes the object to be measured/controlled is a microstructure object in which a flow path 3, of diameter several tens to several hundreds of micrometers, is formed in a (two-dimensional) loop shape within a glass substrate 2. The element 1 is a micro-chemical chip in which a fluid as the object flows in from one end of the flow path 3 and flows out from the other end, and which for example comprises heating/cooling means (included in the physical quantity adjustment means 50) such that predetermined chemical processes are performed within the flow path 3.

Further, one end of the optical waveguide 4 two-dimensionally formed in the substrate 2 is optically connected to a measurement main unit 5 via a connection optical fiber 5a, while the other end of the optical waveguide 4 is optically connected to the measurement main unit 5 via a measurement optical fiber 5b. These connection optical fibers 5a and 5b are arranged outside the substrate 2, and by connecting one end of each to the measurement main unit 5, the optical waveguide 4 functions as a sensor head for the BOCDA method (optical fiber distributed sensing technology, adopting a Brillouin scattering method on the basis of a continuous light wave correlation control method).

The optical waveguide 4 may for example be an optical fiber buried in the substrate 2, as shown in the area (a) in Fig. 2, or may be formed directly in the substrate 2 itself. The flow path 3 itself may function as the optical waveguide 4, as shown in the area (b) of Fig. 2. Also, as shown in the area (a) of Fig. 2, the optical waveguide 4 may be formed along and below the flow path 3, or may be formed along and above or on a side of the flow path 3. Further, the flow path 3 may be formed in the surface of the element 2. In this case, the optical waveguide 4 is formed below or on a side of the flow path 3, or, the flow path 3 itself can function as the optical waveguide 4.

A BOCDA method optical sensing device is configured as shown in Fig. 3. That is, the measurement main unit 5 comprises a laser diode (LD) 6 as a light source, and also comprises a probe light generation system, pumping light generation system, and measurement system. The probe light generation system comprises a 3 dB coupler 7, a polarization controller 8, a phase modulator (LNmod.) 9 controlled by a microwave generator, and an isolator 90. The pumping light generation system comprises a 3 dB coupler 7, a polarization controller 10, an intensity modulator (IM) 11, a delay line 12, an optical fiber amplifier (EDFA) 13, an isolator 130, and a circulator 14. The measurement system comprises a circulator 14, an optical filter 15, a photodiode 16, a lock-in amplifier (LIA) 17, and a computer 18.

First, light output from the LD 6 is split into two light wave components by the 3 dB coupler 7. One of the light waves is frequency-shifted by approximately 11 GHz by the phase modulator (LNmod.) 9, via the polarization controller (PC) 8. This frequency-shifted light wave propagates in order through the isolator 90 and the connection optical fiber 5a as the probe light $P_2$, and is incident on one end of the optical waveguide 4. The other light wave passes through the polarization controller 10, the intensity modulator (IM) 11, and the delay line 12, and is amplified by the optical fiber amplifier (EDFA) 13. This amplified light propagates in order through the isolator 130 and the connection optical fiber 5b as the pumping light $P_1$, and is incident on the other end of the optical waveguide 4. In this way, the pumping light and probe light propagate in opposing directions in the optical waveguide 4, and stimulated Brillouin scattering (SBS) occurs. At this time, the probe light $P_2$ is amplified by a gain corresponding to the gain spectrum (BGS) of the Stokes light wave. The amplified probe light is guided via the circulator 14 to the optical filter 15. After unwanted light components are removed by the optical filter 15, the BGS of the probe light $P_2$ is detected by the photodiode (PD) 16, the lock-in amplifier (LIA) 17, and the like. The control portion 18 (a computer) measures the physical quantity of the object in the element 1 on the basis of this BGS detection result. Also, the control portion 18 controls the physical quantity adjustment means 50 so as to adjust the physical quantity of the object (a physical quantity control method of an object according to the present invention).

In the above-described BOCDA method, the frequencies of the pumping light $P_1$ and probe light $P_2$ are modulated by sinusoidally modifying the injection current of the LD 6. Hence positions are generated, in the length direction of the optical waveguide 4, at which the frequency difference between the pumping light $P_1$ and the probe light $P_2$ is fixed and the correlation is high (correlation peak) and low, and a large SBS is generated only at the correlation peak.

As a result, BGS information for the Stokes light wave can be obtained at a specific position, and by modifying sequentially the frequency modulation pattern of the pumping light $P_1$ and probe light $P_2$, such physical quantities of the fluid (object) in the flow path 3 as the temperature, refractive index, pressure, flow velocity, light absorption loss, and similar can be measured precisely and rapidly.

In the above-described BOCDA method, by adjusting the frequency modulation pattern of the pumping light $P_1$ and probe light $P_2$, the spatial resolution and measurement range in the length direction, measurement time, and similar can be freely adjusted. That is, in order to accurately ascertain the temporal change and distribution of a physical quantity of the object to be measured, it is important that the fineness and spreading with respect to positions in the distribution changes of the object to be measured, and the rate of changes, correspond to the spatial resolution and measurement range in the length direction of the optical waveguide 4 and to the measurement time.

To take one example, for the group velocity of $2.0 \times 10^8$ m/sec and BGS line width of 50 MHz of a typical optical fiber, when the frequency modulation which can be realized using existing laser diodes (LDs) has amplitude 2 GHz and modulation frequency 100 MHz, then a length-direction spatial resolution (dz) of approximately 1 cm is attainable.

Further, because in the BOCDA method continuous light is used, the OSNR (optical signal-to-noise intensity ratio) is good as compared with pulse methods, and there is no need for optical signal multiplication or averaging. Hence rapid measurement is possible, and measurements at 57 Hz per measurement point have been confirmed.

Measurement data for the physical quantity of the object obtained in this way is sent to and accumulated by the control portion 18 which is incorporated within the measurement main unit 5 and is constituted by a personal computer or the like. The control portion 18 can also control chemical processes by for example adjusting heating/cooling means comprised by the element 1 (contained in the physical quantity adjustment means 50), on the basis of the measurement data.

In the following, a measurement method and control method will be explained in more specific terms.

(Temperature Measurement)

In temperature measurement, as shown in Fig. 1, the area (a) of Fig. 2, and Fig. 3, the probe light $P_2$ is made incident from one end of the optical waveguide 4 provided along the flow path 3 of the element 1, and the pumping light $P_1$ is made incident from the other end. When the pumping light $P_1$ and the probe light $P_2$ propagate in opposing directions in the optical waveguide 4, the BGS at the correlation peak is detected, and this measurement data is sent to the control portion 18. The BGS central frequency and spectrum shape change with the temperature, and the correspondence between the central frequency, spectrum shape, and temperature is stored in advance in memory of the control portion 18. Hence by measuring the BGS central frequency or spectrum shape, the temperature at a desired location of the object to be measured flowing in the flow path 3, or the temperature distribution along the length direction of the flow path 3, can be measured. Temperature control is performed by using the control portion 18 to directly control heating/cooling means contained in the physical quantity adjustment means 50, on the basis of the measurement data obtained.

(Refractive Index Measurement)

In refractive index measurements, as shown in Fig. 1, the area (b) of Fig. 2, and Fig. 3, the flow path 3 itself of the element 1 is set as the optical waveguide 4. The probe light $P_2$ is made incident from one end of this optical waveguide 4, and the pumping light $P_1$ is made incident from the other end. In this case also the BGS is detected at the correlation peak, and the measurement data is sent to the control portion 18. In this case, refractive index control of the flow path 3 can be performed indirectly by adjusting the temperature of the flow path 3 through physical quantity adjustment means 50, according to instructions from the control portion 18. In controlling the refractive index of the fluid in the flow path 3, the refractive index can also be controlled indirectly by adjusting the pressure applied to the fluid and the flow velocity (in this case, the physical quantity adjustment means 50 adjusts the amounts of the reagent or other fluid injected into and discharged from the flow path 3).

The BGS central frequency $\upsilon_B$ is given by the following equation (1) below.

$$[\text{E 1}]$$

$$\upsilon_B = \frac{2n v_a}{\lambda} \qquad (1)$$

Here n is the refractive index of the optical waveguide 4, $V_a$ is the speed of sound in the optical waveguide 4, and $\lambda$ is the wavelength of the light in vacuum. The BGS central frequency $\upsilon_B$ changes in proportion to the refractive index n. The correspondence between the central frequency and the refractive index is stored in advance in memory of the control portion 18. By this means, by measuring the BGS central frequency $\upsilon_B$, changes in the refractive index of the object (fluid) in the flow path 3 can be measured.

For example, in the case that the object is glass, the light wavelength is 1.55 $\mu$m the BGS central frequency is 11.07 GHz in the condition of a speed of sound of 5960 m/s and a refractive index of 1.44. The change in the central frequency due to a change in the refractive index is 769 kHz per change by $10^{-4}$ in refractive index.

On the other hand, in the case that the object (fluid) is water, a central frequency of BGS at the light wavelength of 1.55 $\mu$m is 2.56 GHz in the condition of the speed of sound of 1500 m/s and the refractive index of 1.321. The change in the central frequency due to a change in the refractive index is 194 kHz per change by $10^{-4}$ in refractive index.

(Pressure Measurement)

In pressure measurements, as shown in Fig. 1, the area (a) of Fig. 2, and Fig. 3, the probe light $P_2$ is made incident from one end of the optical waveguide 4 provided along the flow path 3 of the element 1, and the pumping light $P_1$ is made incident from the other end. In this case also, the BGS is detected at the correlation peak, and the measurement data is sent to the control portion 18.

The BGS central frequency is shifted in proportion to the length-direction strain in the optical waveguide 4. The correspondence of the central frequency to strain and pressure is stored in advance in memory in the control portion 18. Hence by forming an optical waveguide 4 along the flow path 3, the pressure in the object (fluid) in the flow path 3 can be measured as strain. In this case, the pressure in the fluid is controlled by the control portion 18 that controls the physical quantity adjustment means 50 on the basis of measurement data. That is, the amounts of reagent or other fluid injected into and discharged from the flow path 3 by the physical quantity adjustment means 50 are adjusted according to instructions from the control portion 18, so that the pressure in the fluid can be adjusted indirectly.

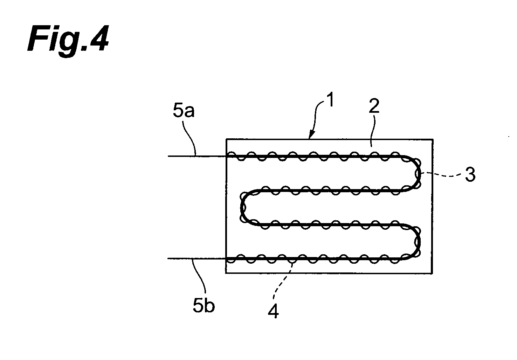

In the case of pressure measurements, as shown in Fig. 4, it is preferable that the optical waveguide 4 is formed so as to intersect the flow path 3 repeatedly in a diagonal direction. This is because the pressure is sensitive to the radial direction of the flow path 3.

(Flow Velocity Measurement)

In flow velocity measurements, as shown in Fig. 1, the area (b) of Fig. 2, and Fig. 3, the fluid (object) itself within the flow path 3 is set as the optical waveguide. The probe light $P_2$ is made incident from one end of the flow path 3 serving as the optical waveguide, and the pumping light $P_1$ is made incident from the other end. By this means, the BGS is detected at the correlation peak, and the measurement data is sent to the control portion 18. Control of the flow velocity of the fluid is also performed by using the control portion 18 to control the physical quantity adjustment means 50 on the basis of measurement data. That is, by adjusting the amount of reagent or other fluid injected into or discharged from the flow path 3 according to instructions from the control portion 18, the physical quantity adjustment means 50 can indirectly adjust the flow velocity of the fluid.

When the fluid is flowing in the flow path 3, the BGS central frequency $\upsilon_B$ changes in proportion to the flow velocity due to the Doppler effect. The BGS central frequency $\upsilon_B$ is expressed by the following equation (2) when the flow velocity is zero:

[E 2]

$$\upsilon_B = \frac{2n v_a}{\lambda} \quad (2)$$

Here $v_a$ takes a positive value in the direction of advance of the pumping light. Also, when the flow velocity is $v_s$ (with positive value in the direction of advance of the pumping light), then the central frequency $\upsilon_B$ is given by equation (3) below.

[E 3]

$$\upsilon_B = \frac{2n (v_a - v_s)}{\lambda} \quad (3)$$

Here the correspondence between the central frequency $\upsilon_B$ and the flow velocity of the object to be measured (fluid) is stored in advance in the control portion 18. Hence as explained above, by measuring the central frequency $\upsilon_B$ for the fluid, the flow velocity of the fluid in the flow path 3 can be measured.

For example, in the case that water (the object to be measured) is flowing in the flow path 3, a central frequency $\upsilon_B$ of the BGS at the light wavelength of 1.55 $\mu$m is 2.56 GHz when the flow velocity is zero, in the condition of a speed of sound of 1500 m/s and a refractive index of 1.321, and the central frequency $\upsilon_B$ due to flow velocity is 170 kHz per flow velocity of 10 cm/s.

(Absorption Loss Measurement)

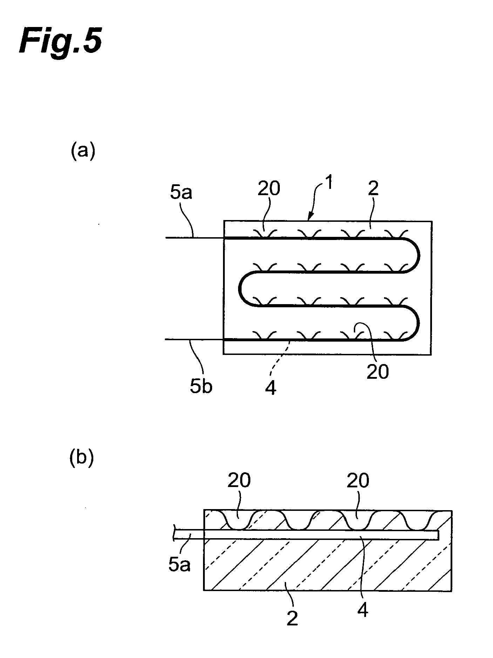

In absorption loss measurements, as shown in Fig. 1, the area (a) of Fig. 2, and Fig. 3, the optical waveguide 4 provided along the flow path 3 is used. However, as shown in the area (b) of Fig. 2, the flow path 3 may itself be used as the optical waveguide. And, as shown in the areas (a) and (b) of Fig. 5, the plurality of cells (depressions) 20, filled with the object, may be formed in a predetermined array pattern, and the optical waveguide 4,forme so as to be proximate to each of the cells 20, may be used. The object itself, filling each of the cells 20, may be configured as a portion of the optical waveguide 4.

The Brillouin gain occurring at different places in the optical waveguide 4 is proportional to the power of the pumping light $P_1$ and the probe light $P_2$. If power increases and decreases due to the interaction between the pumping light $P_1$ and the probe light $P_2$ are ignored, then the Brillouin gain occurring at each place is constant. The absorption loss occurring in the optical waveguide 4 differs for different places, and by measuring this Brillouin gain as a distribution, the absorption loss distribution can be measured. The absorption loss in the flow path 3 can be controlled indirectly, on the basis of the measurement data obtained, by using the control portion 18 to estimate the reaction state of the flow path 3, and making adjustments such that the reaction state of the flow path 3 becomes a desired reaction state. That is, by having the physical quantity adjustment means 50 adjust heating, cooling, the amounts of injection and discharge of the reagent or other fluid (control of the pressure and flow velocity of the fluid itself), and the like, according to instructions from the control portion 18, the reaction state of the flow path 3 can be modified intentionally, and as a result the absorption loss in the flow path 3 can be controlled indirectly.

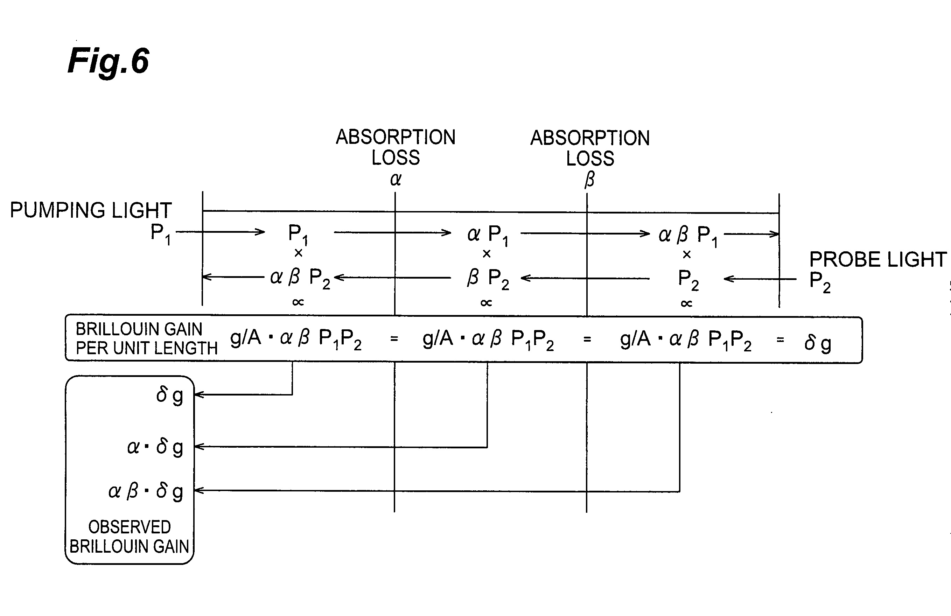

In the case that each of the cells 20 is a measurement point (see the areas (a) and (b) of Fig. 5), then as shown in Fig. 6, by comparing the gain between each of the measurement points as correlation values, the absorption losses received at measurement points can be calculated by the control portion 18. More specifically, in Fig. 6, the pumping light power is taken to be $P_1$ and the power of the probe light which propagates in the opposing direction to this is $P_2$, and as shown in the figure, it is assumed that the absorption losses $\alpha$, $\beta$ are distributed in the optical waveguide. In this case, the Brillouin gain per unit length is $\delta g$ everywhere in the optical waveguide. In this case, the Brillouin gain, which is measured together with the probe light $P_2$, is measured as the Brillouin gain $\alpha\beta\delta g$ occurring at the place in the optical waveguide closest to the probe light source (farthest from the circulator 14), the Brillouin gain occurring at the next-closest place is measured as $\alpha\delta g$, and the Brillouin gain occurring at the farthest place (closest to the circular 14) is measured as $\delta g$. By comparing these with a reference value, the absorption losses $\alpha$, $\beta$ at arbitrary places in the optical waveguide 4 can be determined.

In the above-described measurements of temperature, refractive index, and pressure, a plurality of cells 20 may be employed in place of the flow path 3.

(Case of a Plurality of Elements)

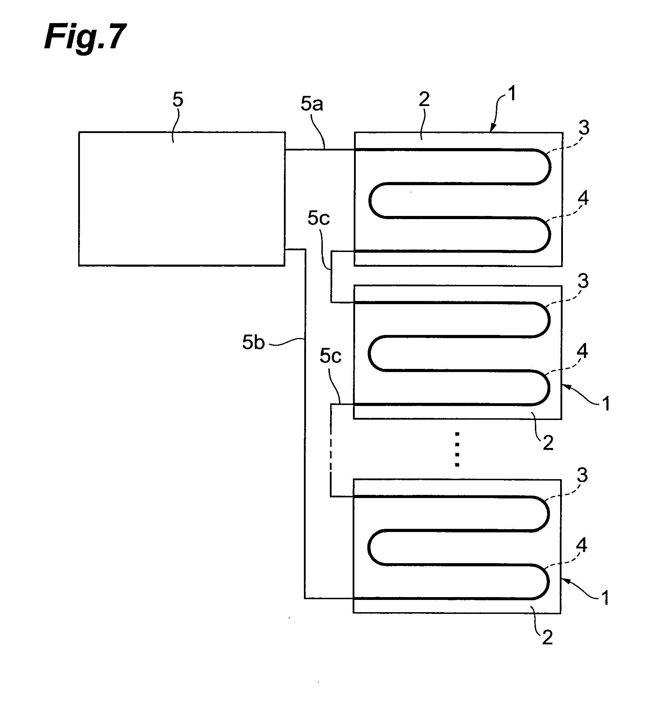

Next, in the case in which the measurement of a physical quantity of an object is performed for a plurality of elements each having a structure such as described above, as shown in Fig. 7, a single optical waveguide is configured (an element group is configured) by optically connecting the optical waveguides 4 of each of the elements 1 by means of connection optical fibers 5c. When both ends are optically connected to a measurement main unit 5 via connection optical fibers 5a and 5b, then various measurements can be performed all at once in the optical waveguides 4 of the elements 1 comprised by the element group.

In the above-described example, the shapes, form, and similar of the substrates 2, flow paths 3, and optical waveguides 4 are not limited to the shapes and similar shown in the drawings, and of course can be selected freely according to the application, the properties of the object to be measured, the purpose of measurements, and similar.

(Case in which the Optical Waveguide is a Separate Member)

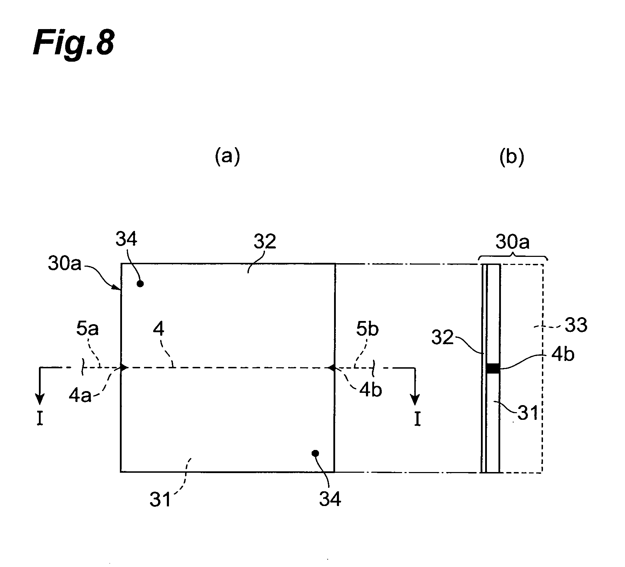

Figs. 8 to 14 show examples in which the above-described optical waveguide 4 is formed on mounting members (optical waveguide chips 30a-30c), differing from element 1, and one among the optical waveguide chips 30a-30c is mounted on the element 1.

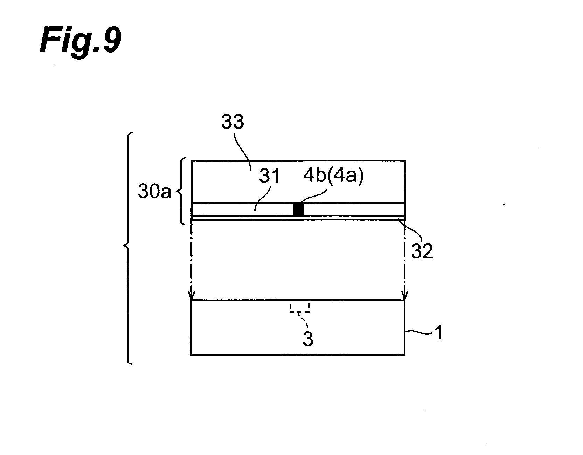

First, the structure of the optical waveguide chip 30a, in which the optical waveguide 4 is one-dimensionally arranged, will be explained with reference to Figs. 8 and 9. Fig. 8 is a plane view (area (a)) and a side view (area (b)) showing the structure of the optical waveguide chip 30a including the optical waveguide 4 one-dimensionally arranged separately from the element 1. Fig. 9 is a cross-sectional view of the optical waveguide chip 30a along line I-I in the area (a) of Fig. 8, and is a cross-sectional view showing the coupled state of the optical waveguide chip 30a and the element 1.

As shown in the areas (a) and (b) of Fig. 8, the optical waveguide chip 30a comprises a square-shape glass substrate 33, a cladding layer 31, an optical waveguide 4 one-dimensionally formed together with the cladding layer 31, and a cladding layer 32 formed as a cover member above the cladding layer 31. Both ends 4a and 4b of the optical waveguide 4 are positioned at end faces of the cladding layer 31, and are processed to have an expanded diameter. The two ends 4a and 4b are coupled with the connection optical fibers 5a and 5b, and are connected to the measurement main unit 5 (see Fig. 3). In this case, the optical waveguide 4 functions as a BOCDA method sensor head. The optical waveguide chip 30a configured in this way is freely mounted on a normal micro-chemical chip without an optical waveguide 4, an IC chip, or another element 1, and used (see Fig. 9).

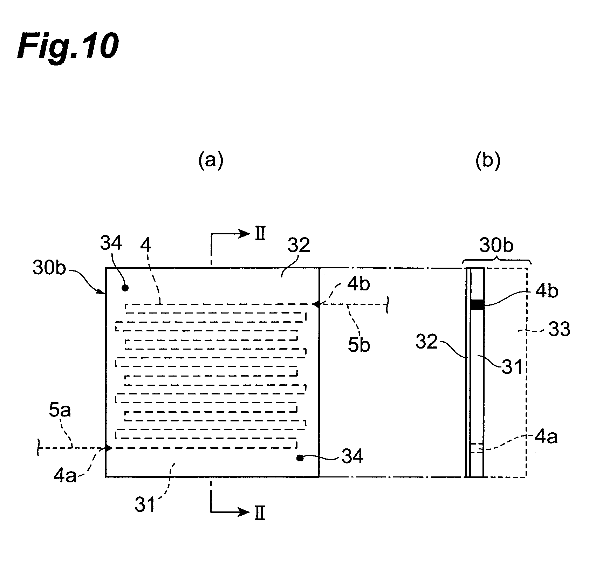

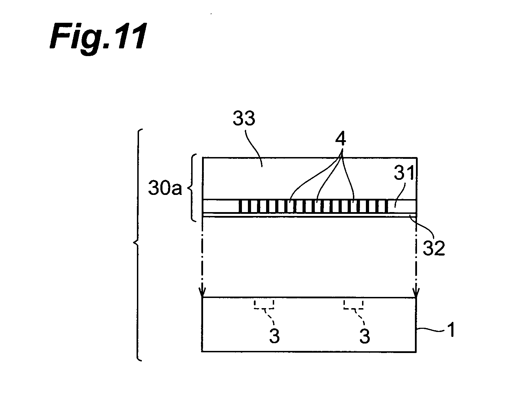

Next, the structure of the optical waveguide chip 30b, in which the optical waveguide 4 is two-dimensionally arranged, will be explained with reference to Figs. 10 and 11. Fig. 10 is a plane view (area (a)) and a side view (area (b)), showing the structure of the optical waveguide chip 30b comprising an optical waveguide 4 two-dimensionally arranged separately from the element 1. Fig. 11 is a cross-sectional view of the optical waveguide chip 30b along line II-II in the area (a) of Fig. 10, and shows the state of coupling between the optical waveguide chip 30b and the element 1.

This optical waveguide chip 30b also comprises a square-shape glass substrate 33, cladding layer 31, optical waveguide 4 two-dimensionally formed together with the cladding layer 31, and cladding layer 32 formed as a cover member on the cladding layer 31, as shown in the areas (a) and (b) of Fig. 10. Both ends 4a, 4b of the optical waveguide 4 are positioned at end faces of the cladding layer 31, and are processed to have an expanded diameter. The two ends 4a and 4b are coupled with the connection optical fibers 5a and 5b, and are optically connected to the measurement main unit 5 (see Fig. 3). In this case, the optical waveguide 4 functions as a BOCDA method sensor head. The optical waveguide chip 30b configured in this way is freely mounted on a normal micro-chemical chip without an optical waveguide 4, an IC chip, or another element 1, and used (see Fig. 11).

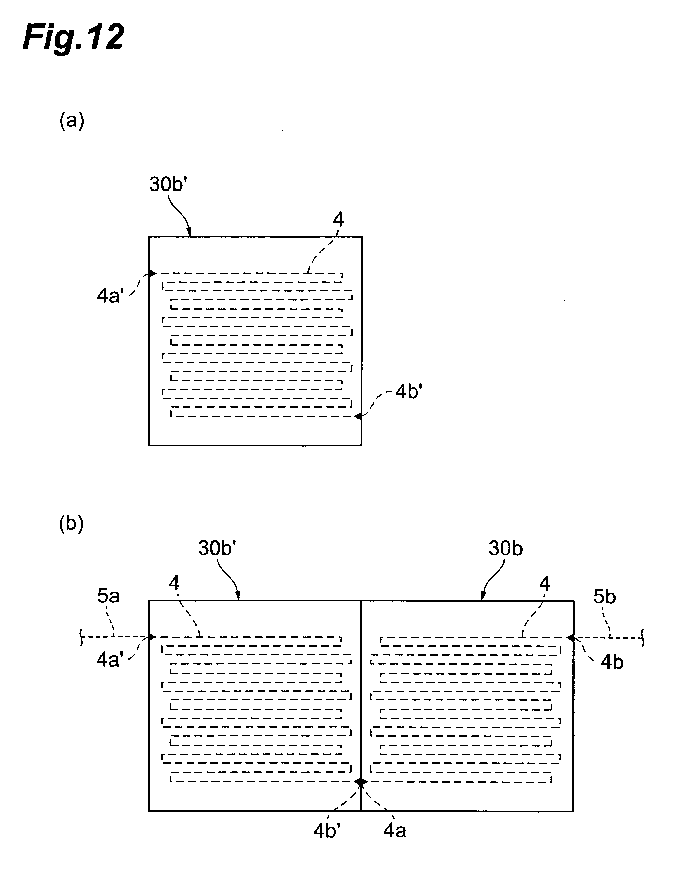

On the other hand, by connecting the optical waveguide chip 30b with a connection optical waveguide chip 30b', as shown in the area (a) of Fig. 12 (see the area (b) of Fig. 12), measurement of a physical quantity of objects to be measured of a plurality of elements, shown in Fig. 7, is also possible. When three or more optical waveguide chips are connected, optical waveguide chips 30b in which an optical waveguide 4 is two-dimensionally arranged, shown in Fig. 10, and connection optical waveguide chips 30b', shown in (a) of Fig. 12, can be arranged in alternation. Here, Fig. 12 is a plane view (area (a)) of a connection optical waveguide chip 30b', connected to the optical waveguide chip 30b shown in Fig. 10, and a plane view (area (b)) showing the coupled state.

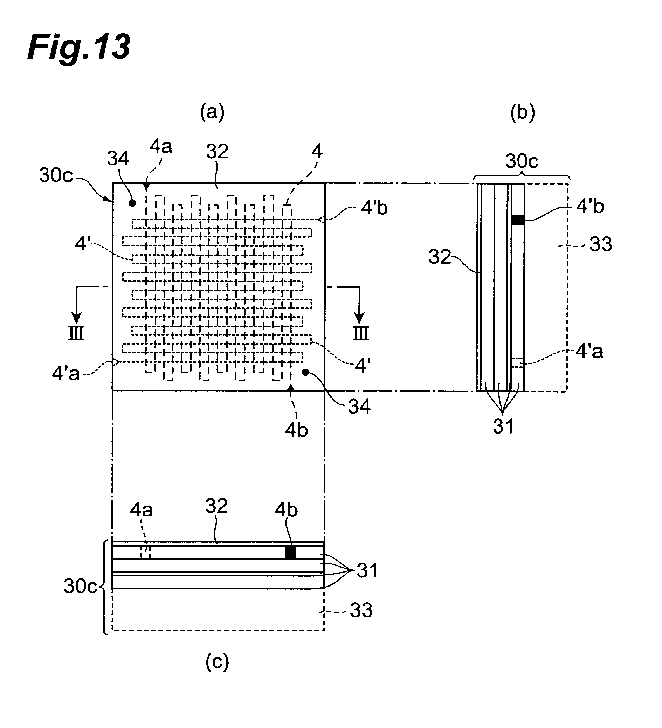

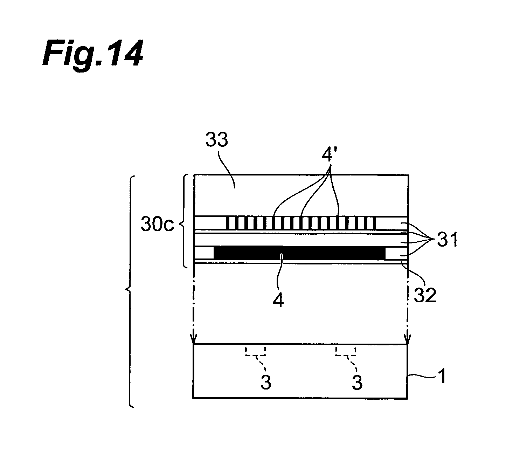

Further, the structure of the optical waveguide chip 30c, in which the optical waveguide 4 is three-dimensionally arranged, will be explained with reference to Figs. 13 and 14. Fig. 13 is a plane view (area (a)) and a side view (areas (b) and (c)) showing the structure of the optical waveguide chip 30c which includes optical waveguides 4, 4' three-dimensionally arranged separately from the element 1. Fig. 14 is a cross-sectional view of the optical waveguide chip 30c along line III-III in the area (a) of Fig. 13, showing the coupled state of the optical waveguide chip 30c and the element 1.

In particular, the optical waveguide chip 30c shown in Fig. 13 is obtained by stacking in stages a plurality of optical waveguide chips 30b (see Fig. 10). By appropriately selecting the directions of the optical waveguides 4, 4' in the upper and lower optical waveguide chips, for example checkerboard-shape optical waveguides 4, 4' such as shown in Fig. 13 are obtained. By means of the optical waveguide chip 30c shown in Fig. 13, the number of measurement points of the upper and lower optical waveguides 4, 4' is increased, so that more precise measurements can be performed, among other advantageous results.

In such an optical waveguide chip 30c also, of course the shapes of the elements 1 and flow paths 3 as objects to be measured, the properties of the object and measurement quantities, and other aspects of the chip shape and optical waveguide form can be selected as appropriate.

In Fig. 9, Fig. 11 and Fig. 14, the element 1 is for example the above-described micro-chemical chip, and the flow path 3 of diameter several tens to several hundreds of micrometers is formed in a two-dimensional loop shape on the upper surface of the glass substrate. With the element 1 and optical waveguide chips 30 (30a-30c) in a stacked state such that the element faces in which the flow paths 3 are formed and the cladding layers 32 are in contact, positions are adjusted such that the optical waveguides 4 are positioned over the flow paths 3. The positioning may be performed such that a positioning marker (not shown) formed on the element 1 and positioning markers 34 formed on the optical waveguide chips 30 (30a to 30c) are aligned.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Industrial Applicability**

A method of measuring a physical quantity of an object and a method of controlling a physical quantity of the object according to the present invention can be applied to optical sensing technology to measure physical quantities of objects to be measured existing on or in an element which is a microstructure object, such as a micro-chemical chip, an IC chip, or the like.

**Claims**

1. A method of measuring a physical quantity of an object that exists on or within an element, comprising:

    preparing an optical waveguide which is one-, two- or three-dimensionally arranged on or within the element; and
    measuring the physical quantity of the object, on the basis of a property variation of light propagating through the optical waveguide, the property variation being attributed to Brillouin scattering occurring in the optical waveguide.

2. A method of measuring a physical quantity of an object that exists on or within an element, comprising:

    irradiating fluid, being the object existing in a flow path which is formed on or within the element and which has two end portions respectively functioning as a light incidence end and as a light emission end, with light from the one end of the flow path being the light incidence end, while securing the fluid itself being the object as an optical waveguide;
detecting the light which is emitted from the other end of the flow path being the light emission end after propagating through the fluid existing in the flow path; and
measuring a physical quantity of the fluid itself, on the basis of a property variation of the detected light which is attributed to Brillouin scattering occurring in the fluid.

3. A method of measuring a physical quantity of an object that exists on or within an element, comprising:

    preparing an optical waveguide which has a light incidence end and a light emission end and which has a shape continuing from the light incidence end to the light emission end, said optical waveguide being arranged on or within the element such that at least a portion thereof is proximate to the object;
    irradiating the interior of the optical waveguide with light from the light incidence end, and detecting light which is emitted from the light emission end after propagating through the optical waveguide; and
    indirectly measuring a physical quantity of the object to be measured, on the basis of a property variation of the detected light which is attributed to Brillouin scattering occurring in the fluid.

4. A method of measuring a physical quantity of an object according to claim 3, wherein the optical waveguide includes an optical guiding member which has one end functioning at least as the light incidence end and the other end functioning at least as the light emission end, at least a portion of the optical guiding member being embedded in the element.

5. A method of measuring a physical quantity of an object according to claim 3, wherein the optical waveguide includes an optical waveguide chip which has one end functioning at least as the light incidence end and the other end functioning at least as the light emission end, and in which an optical waveguide region continuing from the light incidence end to the light emission end is fabricated, and wherein the optical waveguide is arranged on the element by fixing the optical waveguide chip to the element, the optical waveguide is arranged on the element.

6. A method of measuring a physical quantity of an object according to any one of claims 1 to 5, wherein the property variation of light propagating through the optical waveguide is a change in at least one of a central frequency and a shape of the Brillouin gain spectrum being a gain spectrum attributed to Brillouin scattering occurring in the optical waveguide.

7. A method of measuring a physical quantity of an object according to claim 6, wherein a temperature of the object is measured on the basis of the change in at least one of the central frequency and the shape of the Brillouin gain spectrum.

8. A method of measuring a physical quantity of an object according to claim 6, wherein a refractive index of the object is measured on the basis of the change in at least one of the central frequency and the shape of the Brillouin gain spectrum.

9. A method of measuring a physical quantity of an object according to claim 6, wherein a strain applied to the optical waveguide is measured on the basis of the change in at least one of the central frequency and the shape of the Brillouin gain spectrum, and pressure to be applied to the object is determined on the basis of the strain measurement result obtained.

10. A method of measuring a physical quantity of an object according to claim 6, wherein a flow velocity of the object itself, which has a velocity component coinciding with the direction of propagation of light, is measured on the basis of the change in at least one of the central frequency and the shape of the Brillouin gain spectrum.

11. A method of measuring a physical quantity of an object according to any one of claims 1 to 5, wherein the property variation of light propagating through the optical waveguide is a change of the Brillouin gain being a gain attributed to Brillouin scattering occurring in the optical waveguide.

12. A method of measuring a physical quantity of an object according to claim 11, wherein light absorption loss of the object is measured on the basis of the change of the Brillouin gain.

13. A method of measuring a physical quantity of an object according to any one of claims 1 to 12, comprising:

preparing a plurality of elements each on or within which an optical waveguide having a light incidence end and a light emission end is arranged;
configuring an element group, having two optical waveguide end portions which holistically function as a light incidence end and as a light emission end respectively, by optically connecting sequentially the light emission end of the optical waveguide arranged in one element among the plurality of elements with the light incidence end of the optical waveguide arranged in another element; and
measuring a physical quantity of the object to be measured in each of the plurality of elements, by detecting the light which is incident from the optical waveguide end portion functioning as the light incidence end of the element group and which is emitted from the optical waveguide end portion functioning as the light emission end of the element group after propagating through the optical waveguides arranged in each of the plurality of elements.

14. A method of controlling a physical quantity of an object, comprising: adjusting the physical quantity of the object on the basis of measurement results for the object obtained by the measurement method according to any one of claims 1 to 13.

EP 2 116 815 A1

**Fig.1**

CONTROL SIGNAL

PHYSICAL QUANTITY
ADJUSTMENT MEANS

*Fig.2*

(a)

(b)

# Fig.3

MICROWAVE GENERATOR

PHYSICAL QUANTITY ADJUSTMENT MEANS

CONTROL SIGNAL

50

5

1

4

5a

5b

6 LD

7

8

9 LN mod.

PROBE LIGHT P2

90

RF:fm

10

12

PUMPING LIGHT P1

11 IM

13 EDFA

130

14

CHOPPING

17 LIA

16 PD

15

18 COMPUTER

EP 2 116 815 A1

**Fig.4**

# Fig.5

(a)

(b)

# *Fig.6*

EP 2 116 815 A1

# Fig.7

# Fig.8

(a)                                   (b)

# Fig.9

*Fig.10*

(a)                                          (b)

# *Fig.11*

# *Fig.12*

(a)

(b)

**Fig.13**

(a)

(b)

(c)

# Fig.14

## INTERNATIONAL SEARCH REPORT

| International application No. |
|---|
| PCT/JP2007/074447 |

A.  CLASSIFICATION OF SUBJECT MATTER
*G01D5/353*(2006.01)i, *G01D21/00*(2006.01)i, *G01F1/66*(2006.01)i, *G01K11/12* (2006.01)i, *G01L11/02*(2006.01)i, *G01N21/00*(2006.01)i, *G01P5/00*(2006.01)i

According to International Patent Classification (IPC) or to both national classification and IPC

B.  FIELDS SEARCHED

Minimum documentation searched (classification system followed by classification symbols)
G01D5/353, G01D21/00, G01F1/66, G01K11/12, G01L11/02, G01N21/00, G01P5/00

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2001-194191 A  (Nippon Koei Yokohama Works Co., Ltd.), 19 July, 2001 (19.07.01), Full text; all drawings (Family: none) | 1,6 |
| A | JP 5-107121 A  (Toshiba Corp.), 27 April, 1993 (27.04.93), Full text; all drawings (Family: none) | 2 |
| A | JP 2006-297198 A  (Sumitomo Electric Industries, Ltd.), 02 November, 2006 (02.11.06), Full text; all drawings (Family: none) | 2 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 March, 2008 (14.03.08) | 25 March, 2008 (25.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

26

**INTERNATIONAL SEARCH REPORT**

International application No.

PCT/JP2007/074447

C (Continuation).    DOCUMENTS CONSIDERED TO BE RELEVANT

| Category* | Citation of document, with indication, where appropriate, of the relevant passages | Relevant to claim No. |
|---|---|---|
| A | JP 4-174332 A  (Toshiba Corp.),<br>22 June, 1992 (22.06.92),<br>Full text; all drawings<br>(Family: none) | 2 |

Form PCT/ISA/210 (continuation of second sheet) (April 2007)

**INTERNATIONAL SEARCH REPORT**

International application No.

PCT/JP2007/074447

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1, 2, 6

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| **INTERNATIONAL SEARCH REPORT** | International application No. |
|---|---|
| | PCT/JP2007/074447 |

Continuation of Box No.III of continuation of first sheet(2)

· The inventions of claims 1, 2, 6 relate to an object physical quantity measuring method for measuring a physical quantity of a fluid itself according to the variation of a characteristic of a detected light caused by the Brillouin scattering which occurs in the fluid.

· The inventions of claims 3-5 relate to an object physical quantity measuring method for indirectly measuring a physical quantity of an object according to the variation of a characteristic of a detected light caused by the Brillouin scattering which occurs in the fluid.

· The invention of claim 7 relates to a technique of measuring the temperature of an object according to the variation of at least the center frequency or the shape of the Brillouin gain spectrum.

· The invention of claim 8 relates to a technique of measuring the refractive index of an object according to the variation of at least the center frequency or the shape of the Brillouin gain spectrum.

· The invention of claim 9 relates to a technique of measuring the strain caused in the optical waveguide of an object according to the variation of at least the center frequency or the shape of the Brillouin gain spectrum.

· The invention of claim 10 relates to a technique of measuring the flow speed of an object itself having a speed component in the direction of the light propagation according to the variation of at least the center frequency or the shape of the Brillouin gain spectrum.

· The inventions of claim 11, 12 relate to a technique of measuring the variation of the Brillouin gain which is the gain attributed to the Brillouin scattering occurring in an optical waveguide.

· The invention of claim 13 relates to a technique of sequentially and optically connecting the light entering ends and the light exiting ends of elements where optical waveguides each having a light entering end and a light exiting end are disposed.

· The invention of claim 14 relates to a technique of adjusting the physical quantity of an object according to the result of the measurement of the object.

Form PCT/ISA/210 (extra sheet) (April 2007)

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006297198 A

**Non-patent literature cited in the description**

- **K.Y Song ; Z. He ; K. Hotate.** Distributed strain measurement with millimeter-order spatial resolution based on Brillouin optical correlation domain analysis. *Opt. Lett.,* 2006, vol. 31, 2526-2528